Europäisches Patentamt

European Patent Office

Office européen des brevets

(11) Numéro de publication : **0 314 613 B1**

(12) **FASCICULE DE BREVET EUROPEEN**

(45) Date de publication du fascicule du brevet :
**15.01.92 Bulletin 92/03**

(51) Int. Cl.$^5$ : **H02K 17/16, H02K 15/02**

(21) Numéro de dépôt : **88810670.5**

(22) Date de dépôt : **28.09.88**

(54) **Procédé de fabrication d'un rotor à cage d écureuil comprenant une baque de court-circuit intermédiaire.**

(30) Priorité : **02.10.87 FR 8713655**

(43) Date de publication de la demande :
**03.05.89 Bulletin 89/18**

(45) Mention de la délivrance du brevet :
**15.01.92 Bulletin 92/03**

(84) Etats contractants désignés :
**AT BE CH DE ES GB IT LI NL SE**

(56) Documents cités :
**DE-A- 2 649 561
DE-A- 2 741 036
FR-A- 958 926
FR-A- 1 285 836**

(56) Documents cités :
**US-A- 2 971 106
PATENT ABSTRACTS OF JAPAN, vol. 10, no.
268 (E-436)(2324), 12 septembre 1986; & JP - A
- 61 92143**

(73) Titulaire : **SOMFY
8, rue de Margencel
F-74300 Cluses (FR)**

(72) Inventeur : **Plumer, Louis
4, rue des Artisans
F-74300 Cluses (FR)**

(74) Mandataire : **Meylan, Robert Maurice et al
c/o BUGNION S.A. 10, route de Florissant
Case Postale 375
CH-1211 Genève 12 - Champel (CH)**

EP 0 314 613 B1

Jouve, 18, rue Saint-Denis, 75001 PARIS

## Description

La présente invention a pour objet un procédé de fabrication d'un rotor à cage d'écureuil pour moteur à induction selon lequel on fabrique des paquets de tôles par la méthode consistant à découper et à assembler automatiquement des tôles de rotor en matériau magnétique au moyen d'une machine à suivre dans laquelle les tôles sont découpées d'une bande au moyen de poinçons sélectionnables, puis entraînées en rotation d'un angle déterminé et munies de semi-découpages, puis assemblées en paquets au moyen des semi-découpages, l'angle de rotation ayant pour effet de créer des encoches hélicoïdales sur le paquet de tôles, et on surmoule les paquets de tôles avec un matériau conducteur non magnétique.

Cette méthode, connue sous le nom de procédé FASTEC (marque déposée), est décrite en détail dans la publication "Progressive Lamination Die with Automatic Stacking Device" (FASTEC® System) de NOBUAKI IGUCHI, International Forum '85 on Die and Mold. Ce procédé et la machine pour sa mise en oeuvre permettent de fabriquer des rotors à cage d'écureuil de façon particulièrement rationnelle. La machine à suivre est équipée d'un poste de commande permettant de faire agir préférentiellement certains poinçons et de faire tourner la matrice d'emboîtage de l'angle désiré de façon synchrone avec chaque coup de presse. Ce procédé, qui présente l'avantage d'être complètement automatique et de fournir des paquets de tôles directement surmoulables, ne permet cependant pas de réaliser des rotors comportant une bague intermédiaire de court-circuit tel que le rotor décrit, par exemple, dans le document FR-A-2562348. Jusqu'ici, les tôles de tels rotors à bague intermédiaire de court-circuit ont dû être assemblées manuellement. Les tôles découpées sont tout d'abord empilées, l'espace nécessaire à la bague intermédiaire de court-circuit étant obtenu en intercalant dans l'empilage quelques tôles spéciales, en général trois tôles, d'un diamètre extérieur plus petit, puis on crée l'hélice manuellement au moyen de cordes à piano introduites dans les encoches. On chasse ensuite un arbre provisoire dans le paquet de tôles pour maintenir ces tôles afin de pouvoir procéder au surmoulage. L'arbre provisoire est ensuite enlevé et remplacé par un arbre définitif. Une telle méthode manuelle est longue, fastidieuse et coûteuse. L'automatisation d'une telle méthode manuelle au moyen de la méthode FASTEC ne présente guère d'intérêt car elle conduirait à poinçonner, dans la même bande, entre les tôles de rotors, des tôles de diamètre extérieure plus petit, ce qui n'est évidemment pas possible sans artifice supplémentaire pénalisant, tel que remise en bande, par exemple.

La présente invention vise précisément à fabriquer, par la méthode FASTEC, un paquet de tôles présentant l'espace nécessaire à l'obtention d'une bague intermédiaire de court-circuit lors de l'opération de surmoulage. Un procédé pour l'obtention de bagues intermédiaries de court-circuit est décrit dans le fascicule de brevet FR-A-958926.

Le procédé selon l'invention est caractérisé en ce qu'on élimine au moins une dent sur deux des tôles dont l'emplacement dans le paquet correspond à l'emplacement désiré de la bague intermédiaire de court-circuit et qu'on fait tourner les tôles découpées d'un angle correspondant à un nombre entier de dents augmenté de l'angle de l'hélice désirée, ce nombre entier étant différent du nombre de dents d'une tôle à denture complète et de son multiple et différent du nombre de dents supprimées entre deux dents consécutives et de son multiple, de telle sorte que lors du surmoulage on obtient une zone annulaire continue de matière non magnétique.

Une forme d'exécution particulièrement intéressante du procédé selon l'invention consiste à ne conserver que trois dents au moins approximativement régulièrement réparties et à faire tourner les tôles d'un l'angle correspondant à une deux dents augmenté de l'angle de l'hélice. Trois dents suffisent en effet à maintenir ces tôles centrées lors de la mise en paquets, tandis qu'on a le minimum de fer dans la bague intermédiaire de court-circuit.

Le dessin annexé représente quelques formes d'exécution du rotor obtenu par le procédé selon l'invention.

La figure 1 représente le rotor à cage d'écureuil et bague intermédiaire de court-circuit que l'on veut obtenir.

La figure 2 représente une tôle normale du rotor de la figure 1.

La figure 3 représente une tôle destinée à occuper l'emplacement de la bague intermédiaire de court-circuit.

La figure 4 est une vue développée du rotor comprenant des tôles selon les figures 2 et 3 entraînées en rotation selon un premier angle.

La figure 5 représente une vue développée d'un rotor réalisé au moyen de tôles selon les figures 2 et 3 entraînées en rotation selon un second angle.

La figure 6 représente une seconde forme d'exécution d'une tôle destinée à occuper l'espace de la bague intermédiaire de court-circuit.

La figure 7 est une vue développée d'un rotor constitué de tôles selon les figures 2 et 6.

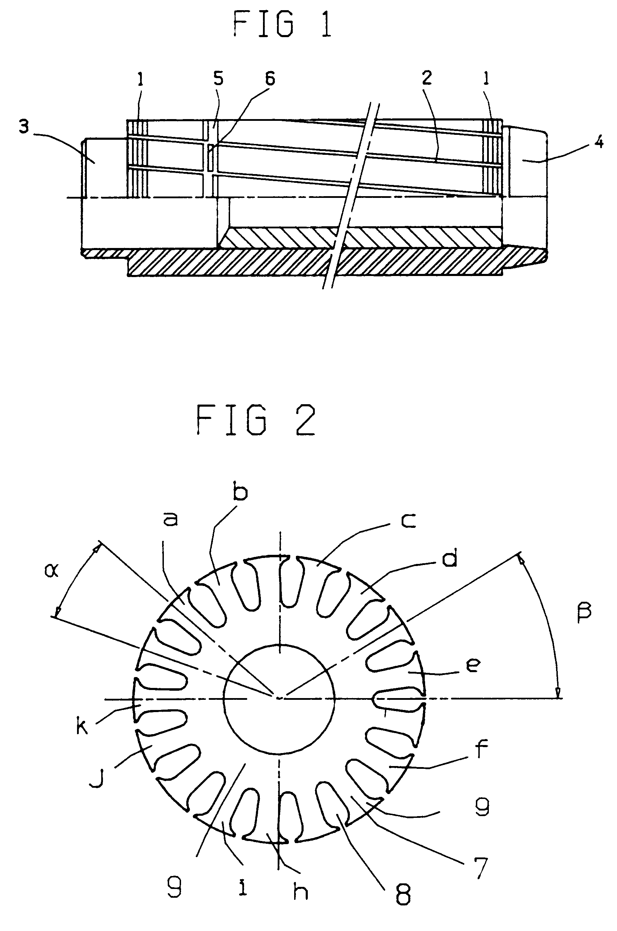

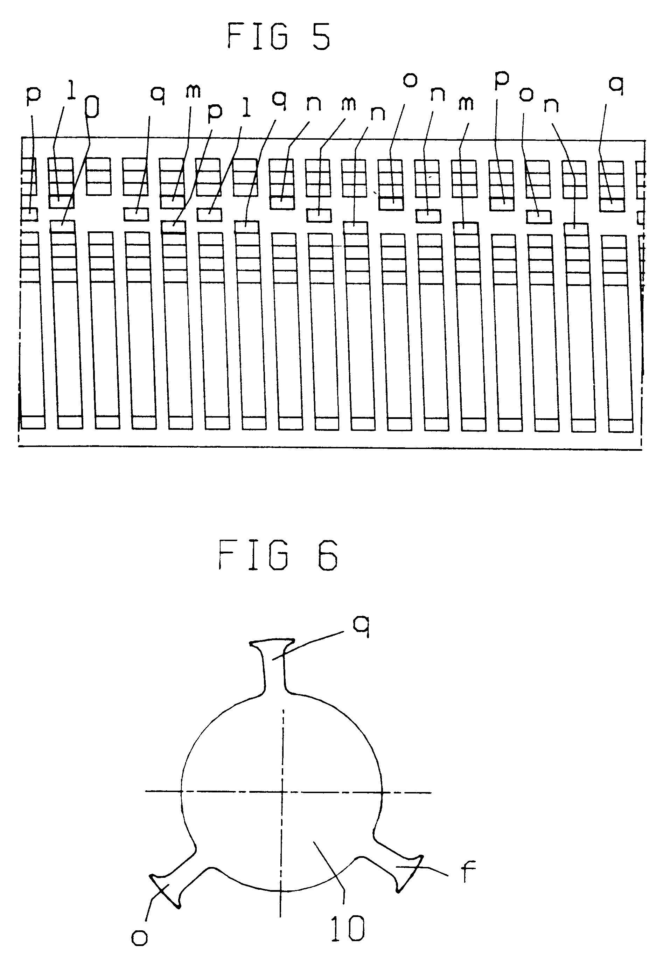

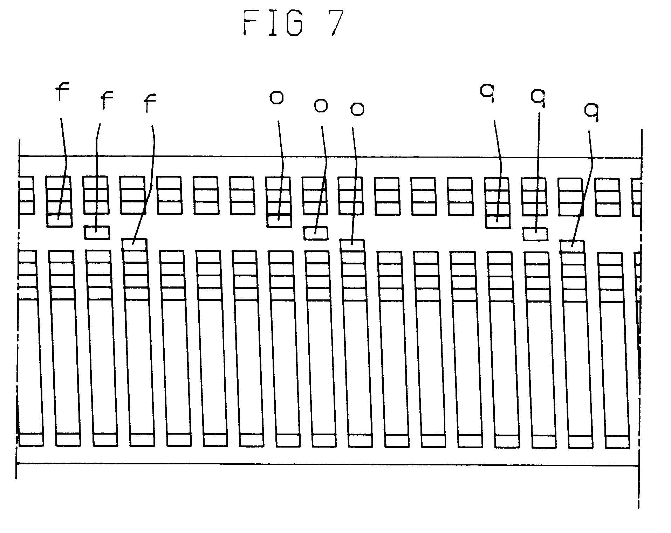

Sur le rotor représenté à la figure 1, on reconnaît les paquets de tôles 1, dont certains seulement ont été représentés à chaque extrémité du rotor, les encoches 2 remplies d'un matériau conducteur non magnétique, par exemple de l'aluminium, les bagues de court-circuit 3 et 4 à chaque extrémité du rotor et une bague intermédiaire de court-circuit 5. En 6 on a représenté les dents ou épanouissements des tôles selon figures 6 et 7 sur lesquelles on reviendra plus loin.

L'une des tôles 1 est représentée à la figure 2. Cette tôle présente dix-sept dents 7 définissant dix-sept entre-dents 8 destinées à former les encoches du rotor et entourant une partie intérieure 9 destinée à constituer la culasse du rotor.

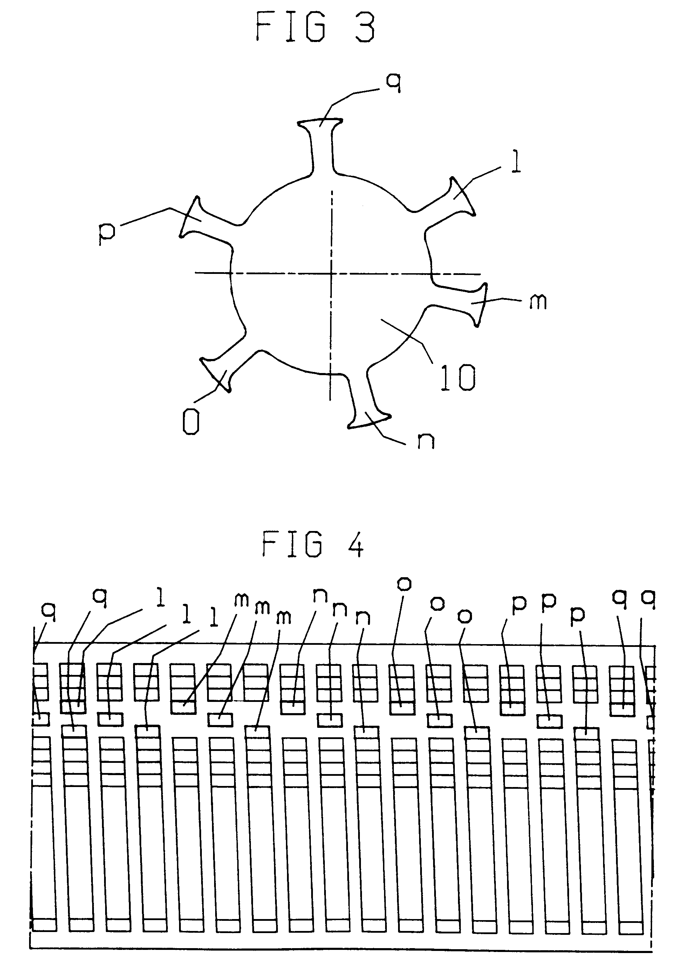

La figure 3 représente une tôle destinée à définir l'espace destiné à la bague intermédiaire de court-circuit. Cette tôle correspond à une tôle selon la figure 2 à laquelle on a supprimé les dents a, b, c, d, e, f, g, h, i, j, k, c'est-à-dire deux dents sur trois, sauf entre les dents l et m, compte tenu du nombre impair de dents. L'enlèvement des dents s'effectue en déclenchant, après un nombre de coups de presse correspondant à la position souhaitée de la bague de court-circuit, et pendant un nombre de coups de presse correspondant à l'épaisseur de la bague de court- circuit souhaitée, un poinçon ad hoc. Dans le cas de la figure 4 ce sont successivement trois tôles auxquelles on enlève des dents.

Dans la machine à suivre, après découpage, toutes les tôles sont déposées dans une matrice d'emboîtage entraînée en rotation pas-à-pas de façon synchrone avec chaque coup de presse, de façon à décaler angulairement les tôles entre elles. Dans l'exemple représenté à la figure 4, cet angle de rotation β correspond au pas entre deux dents, c'est-à-dire à l'angle α, (fig. 2) augmenté de l'angle de l'hélice que l'on désire obtenir. Dans l'espace 5 correspondant à la bague intermédiaire de court-circuit, les dents des tôles selon figure 3 sont ainsi décalées les unes par rapport aux autres de la valeur d'une dent à une exception près. Lors du surmoulage par la matière conductrice non magnétique, on obtient ainsi dans l'espace 5 une continuité de matière qui assure une bonne conductibilité électrique, c'est-à-dire une bague intermédiaire de court-circuit. Il est évident que la rotation des tôles doit être telle que les dents des tôles selon la figure 3 soient décalées. Ceci est le cas si on fait tourner les tôles d'un nombre de dents différent de dix-sept ou de son multiple et différent du nombre de pas séparant deux dents consécutives et de son multiple. Il est donc possible de faire tourner les tôles du rotor et notamment les tôles selon la figure 3 d'un angle correspondant à plus d'une dent. La figure 5 représente, à titre d'exemple, un rotor obtenu avec une rotation des tôles d'un angle correspondant à quatre dents c'est-à-dire quatre α plus l'angle de l'hélice. On constate que ce rotor présente le même aspect que le rotor représenté à la figure figure 4.

Les figures 6 et 7 représentent, à titre d'exemple, une seconde forme d'exécution. Les tôles destinées à occuper l'espace réservé à la bague intermédiaire de court-circuit ne comportent plus que trois dents f, o et q, en reprenant les références utilisées aux figures 2 et 3. Ces trois dents sont approximativement régulièrement réparties sur la circonférence de telle sorte qu'elles assurent le centrage de la tôle dans la matrice d'emboîtage et lors de l'empilage. L'espace réservé à la bague intermédiaire de court-circuit est à nouveau obtenu au moyen de trois tôles. Les tôles sont entraînées en rotation d'un angle β, c'est-à-dire d'un pas de denture augmenté de l'angle de l'hélice désiré. La quantité de fer dans la bague intermédiaire de court-circuit 5 est réduite au minimum.

A partir d'une tôle selon la figure 2, il serait également possible de conserver quatre ou huit dents pour les tôles destinées à créer l'espace pour la bague intermédiaire de court-circuit.

Après surmoulage, on usine l'intérieur du rotor de manière à enlever la couronne 10 reliant les dents des tôles situées dans la bague intermédiaire de court-circuits 5 de manière à ne laisser subsister que cette bague intermédiaire.

**Revendications**

1. Procédé de fabrication d'un rotor à cage d'écureuil pour moteur à induction selon lequel on fabrique des paquets de tôles par la méthode consistant à découper et à assembler automatiquement des tôles de rotor en matériau magnétique au moyen d'une machine à suivre dans laquelle les tôles sont découpées d'une bande au moyen de poinçons sélectionnables, puis entraînées en rotation d'un angle déterminé et munies de semi-découpages, puis assemblées en paquets au moyen des semi-découpages, l'angle de rotation ayant pour effet de créer des encoches hélicoïdales sur le paquet de tôles, et on surmoule les paquets de tôles avec un matériau conducteur non magnétique, caractérisé en ce qu'afin d'obtenir une bague de court-circuit intermédiaire (5) on élimine au moins une dent sur deux des tôles dont l'emplacement dans le paquet correspond à l'emplacement désiré de la bague intermédiaire de court-circuit, et qu'on fait tourner les tôles découpées d'un angle correspondant à un nombre entier de dents augmenté de l'angle de l'hélice désirée, ce nombre entier étant différent du nombre de dents d'une tôle à denture complète et de son multiple et différent du nombre de pas séparant deux dents consécutives et de son multiple, de telle sorte que lors du surmoulage on obtient une zone annulaire continue de matériau non magnétique (5).

2. Procédé selon la revendication 1, caractérisé en ce qu'on ne laisse subsister que trois dents (f, o, q) des tôles occupant l'emplacement de la bague intermédiaire de court-circuit désirée.

**Patentansprüche**

1. Verfahren zur Herstellung eines Käfigläufers für einen Induktionsmotor, wonach Blechpakete nach der Methode hergestellt werden, die darin besteht, Läuferbleche aus magnetischem Material automatisch mittels einer Folie-Maschine zu schneiden und zusammenzufügen, in welcher die Bleche aus einem Band mit Hilfe auswählbarer Stamzstempel ausgestanzt, dann um einen bestimmten Winkel gedreht und mit Halbstanzschnitten versehen werden, und danach mit Hilfe der Halbstanzschnitte zu Paketen zusammengesetzt werden, wobei der Drehwinkel dazu dient, schraubenförmige Kerben auf dem Blechpaket zu erzeugen, und dann die Blechpakete mit einem nicht magnetischen leitenden Material ausgegossen werden, dadurch gekennzeichnet, dass man, um einen Zwischen-Kurzschlussring (5) zu erhalten, wenigstens jeden zweiten Zahn der Bleche, dessen Stelle im Paket der gewünschten Stelle des Zwischen-Kurzschlussrings entspricht, beseitigt, und dass man die gestanzten Bleche um einen Winkel dreht, der einer ganzen Zahl von Zähnen, vermehrt um den gewünschten Schraubenwinkel, entspricht, wobei diese ganze Zahl sich von der Zähnezahl eines Blechs mit vollständiger Zahnung und ihrem Vielfachen sowie von der Zahl der zwei aufeinanderfolgende Zähne trennenden Teilung und ihrem Vielfachen unterscheidet, derart, dass beim Vergiessen eine kontinuierliche kreisringförmige Zone aus nicht magnetischem Material (5) entsteht.

2. Verfahren nach Anspruch 1, dadurch gekennzeichnet, dass man nur drei Zähne (f, o, q) der Bleche stehenlässt, welche den Platz des gewünschten Zwischen-Kurzschlussrings einnehmen.

## Claims

1. A process for producing a squirrel-cage rotor for an induction motor, whereby packets of laminations are made by the method consisting in automatically cutting out and assembling rotor laminations of magnetic material by means of a follow-on machine in which the laminations are cut from a strip by means of selectable punches, rotated through a determined angle and provided with half-cutouts, and thereupon assembled in packets by means of the half-cutouts, the angle of rotation having the effect of forming helicoidal slots on the packet of laminations, and the packets of laminations are filled with a nonmagnetic conductive material, characterized in that, in order to obtain an intermediate short-circuiting ring (5), at least one tooth in every two is removed from the laminations whose position in the packet corresponds to the desired situation of the intermediate short-circuiting ring, and the laminations cut out are turned through an angle corresponding to a whole number of teeth plus the angle of the desired helix, this whole number being different from the number of teeth of a lamination having a complete toothing and from a multiple thereof, and different from the number of steps separating two consecutive teeth and a multiple thereof, in such a manner that when filling is effected a continuous annular zone of nonmagnetic material (5) is obtained.

2. A process as claimed in claim 1, characterized in that only three teeth (f, o, q) are left on the laminations occupying the site of the desired intermediate short-circuiting ring.

# FIG 1

# FIG 2

## FIG 3

## FIG 4

## FIG 5

## FIG 6

FIG 7